# EUROPÄISCHE PATENTSCHRIFT

(11) **EP 2 405 067 B1**
(45) Veröffentlichungstag und Bekanntmachung des Hinweises auf die Patenterteilung: **21.06.2017**
(21) Anmeldenummer: 11004035.9
(22) Anmeldetag: 16.05.2011
(51) Int. Cl.: E04B 1/68, E04F 13/08, C09K 3/10, A47K 3/00

(54) **Dicht- und Montageband mit einem Schnittschutz**
Sealing and assembly strip with cut protection
Bande d'étanchéité et de montage dotée d'une protection contre les coupures

(30) Priorität: 09.07.2010 AT 43810 U
(43) Veröffentlichungstag der Anmeldung: 11.01.2012
(73) Patentinhaber: GABAG Produktions & Vertriebs AG, 6403 Küssnacht SZ (CH)
(72) Erfinder: Gassmann, Urs, 6343 Rotkreuz (CH)
(74) Vertreter: Reb, Carina

(56) Entgegenhaltungen:
- WO-A2-2010/086428
- DE-A1- 10 105 096
- DE-A1-102007 043 593
- US-A1- 2010 307 093

## Beschreibung

Die vorliegende Erfindung betrifft ein Dicht- und Montageband, wie es im Sanitärbereich beim Setzen von Bade-, Duschwannen, Waschbecken oder ähnlichen Einbaugegenständen oder aber auch bei Wand-Wand-, Wand-Boden- oder Boden-Boden-Übergängen Verwendung findet.

Solche Dicht- und Montagebänder weisen vorzugsweise eine Klebefläche auf einer Vorderseite auf, die beispielsweise bündig mit dem Rand des Einbaugegenstandes - beispielsweise an einer senkrechten Ausprägung des Wannenrandes, auch Wannenauf- oder -abbordung genannt - angebracht werden. Diese Klebefläche auf der Vorderseite ist nur in einem ersten, in diesem Fall unteren Bereich des Dicht- und Montagebandes angeordnet, sodass nach dem Anbringen des Dicht- und Montagebandes an dem Rand des Einbaugegenstandes ein zweiter, in diesem Fall oberer Bereich des Dicht- und Montagebandes den Rand des Einbaugegenstandes überragt. Die Rückseite dieses zweiten bzw. oberen Bereiches des Dicht- und Montagebandes kann ebenfalls eine Klebefläche aufweisen, die an einer Anschlusswand oder an einem Anschlussboden angeklebt wird und anschließend üblicherweise überlappend befliest wird. Es sind jedoch auch zweite bzw. obere Bereiche üblich, die keine rückseitige Klebefläche aufweisen, sondern beispielsweise aus einem Gewirke bestehen, das mit Fliesenkleber, einer Dichtschlämme oder einem flüssigen Dichtanstrich auf die Anschlusswand oder auf den Anschlussboden aufgetragen werden und so eine zweite, rückseitige Dichtfläche bilden.

Somit besteht grundsätzlich bei Dicht- und Montagebändern für die beschriebenen Zwecke ein erster Bereich in Form einer ersten Klebe- bzw. Dichtfläche zu einem Einbaugegenstand, zu einer ersten Wand oder zu einem ersten Boden und ein zweiter Bereich in Form einer zweiten Klebe- bzw. Dichtfläche zu der Anschlusswand oder dem Anschlussboden oder aber auch zu einem zweiten Einbaugegenstand. Diese beiden Bereiche oder Klebe- bzw. Dichtflächen sind üblicherweise ein- oder mehrstückig durch das Material einer Trägerfolie bzw. eines Trägerstreifens miteinander verbunden und können auf derselben Seite des Trägermaterials bzw. der Trägerfolie oder an gegenüberliegenden Seiten des Trägermaterials bzw. der Trägerfolie angeordnet sein.

In der täglichen Anwendung hat sich gezeigt, dass es von Vorteil ist, wenn die Trägerfolie des Dicht- und Montagebandes zwar biegsam, aber relativ widerstandsfähig ist. Insbesondere die zweite Klebe- bzw. Dichtfläche zu der Anschlusswand oder dem Anschlussboden hingegen ist wünschenswerterweise möglichst geschmeidig, um selbst auf nicht ganz glatten oder gar porösen Untergründen eine zuverlässige Dichtigkeit zu gewährleisten. Die wünschenswerte Erfüllung beider Eigenschaften, obwohl sie eher als konträr gelten, stellt somit einen limitierenden Kompromiss und somit einen Nachteil bei der Herstellung herkömmlicher Dicht- und Montagebänder dar.

Ein weiterer Nachteil ergibt sich bei der Montage eines Einbaugegenstandes hinein in eine Ecke, die beispielsweise aus zwei zueinander annähernd senkrecht stehenden Anschlusswänden gebildet ist. Solche Ecken sind besonders anfällig für Feuchtigkeitseinbruch und Schimmelbildung. Wenn das Material des Dicht- und Montagebandes bzw. die Trägerfolie so weich und geschmeidig ist, dass es gut in die Ecke eingeklebt werden kann, dann bietet es die erwünschte Robustheit nicht mehr, auch im Hinblick auf minimale Bewegungen nicht, die zwischen dem Einbaugegenstand und der Anschlusswand auftreten, man denke diesbezüglich beispielsweise an die unterschiedlichen Temperaturausdehnungskoeffizienten von z.B. Stahlbadewannen und Mauerwerk oder Beton oder an Setzungen des Einbaugegenstandes oder an Bodensetzungen.

Wenn hingegen genügend robuste Materialien als Material für das Dicht- und Montageband bzw. für die Trägerfolie verwendet werden, ist es wiederum nachteilig für die Montage des Einbaugegenstandes in die Ecke. Um die Fliesen mehr oder minder auf Stoß setzen zu können, zugunsten eines anschließenden Verfugens mittels einer ansprechenden, nicht allzu breiten Silikonfuge, ist der Fliesenleger versucht, das Material des Dicht- und Montagebandes oder die Trägerfolie einzuschneiden. Damit ist jedoch ausgerechnet in den feuchtigkeitsanfälligen Ecken die Dichtigkeit gefährdet, was wiederum einen Nachteil bei herkömmlichen Dicht- und Montagebändern darstellt.

Ein weiterer Nachteil tritt bei herkömmlichen Dicht- und Montagebändern auf, wenn nach einem ersten kompletten Einbau des Einbaugegenstandes, eventuell nach mehreren Jahren, lediglich die Silikonfuge erneuert werden soll. Das Silikon der Silikonfuge kann gealtert sein, undichte Stellen aufweisen oder durch Schimmelbildung unansehnlich geworden sein. Der Handwerker, der die alte Silikonfuge entfernen möchte, wird sie mit einem spitzen, scharfen Gegenstand wie beispielsweise einem Messer wegschneiden wollen. Wenn er jedoch nur ein wenig zu tief schneidet, - ohne dass er dieses erkennen könnte - so zerschneidet er auch das unterhalb der Silikonfuge angeordnete Dicht- und Montageband und reduziert so die Gesamt-Dichtigkeit der neuen Dichtanordnung erheblich. Die Verlegung eines neuen Dicht- und Montagebandes wiederum wäre nicht wirtschaftlich, weil hierfür mindestens die unterste Reihe der Fliesen und der Einbaugegenstand entfernt und wieder neu eingebaut bzw. die Fliesen neu verlegt werden müssten.

Die Internationale Veröffentlichungsschrift WO 2010/086428 A2 beschreibt ein gattungsgemäßes Dichtband zur dichten Montage eines Einbaugegenstandes wie zum Beispiel einer Dusch- oder Badewanne an eine Anschlusswand. Hierfür weist das Dichtband wie üblich eine flexible Trägerfolie mit einer ersten, rückseitigen Klebe- bzw. Dichtfläche zur Anschlusswand und einer zweiten, vorderseitigen Klebe- bzw. Dichtfläche zum Einbaugegenstand auf. Im eingebauten, annähernd senkrechten Einbauzustand des Dichtbandes ist die erste, rückseitige Klebe- bzw. Dichtfläche an einem ersten, oberen Bereich der Trägerfolie angeordnet und die zweite, vorderseitige Klebe- bzw. Dichtfläche an einem zweiten, unteren Bereich der Trägerfolie. Die Klebe- bzw. Dichtflächen sind zur Verbesserung der Praktikabilität des Dichtbandes und seiner Klebe- bzw. Dichtflächen erfindungsgemäß mit mehreren abziehbaren Schutzstreifen versehen.

Die Offenlegungsschrift DE 10 2007 043 593 A1 offenbart ein Dichtelement zur Ausbildung eines Wandanschlusses bei Sanitärartikeln, bei dem zur Überbrückung der Spalte zwischen dem Sanitärartikel und dem Wandbereich ausreichende Flexibilität gesucht wird. Hierfür wird vorgeschlagen, das Dichtelement mit einem Grundkörper in Form einer Folie aus Metall, CFK oder einem Verbundwerkstoff auszustatten. Darüber hinaus formt der Grundkörper einen mittigen, elastisch nachgiebigen Bereich aus, der aus einem Wellenprofil besteht. Dieses Wellenprofil ist einstückig aus dem gleichen Material des Grundkörpers gebildet und schützt oder verstärkt das Dichtelement gerade in seinem mittigen Längsbereich nicht, auf den es unter den oben geschilderten Aspekten ankommt. Außerdem dichten untere und obere Bereiche des Grundkörpers aus verstärktem Material in Eckbereichen nicht gut.

Die Offenlegungsschrift DE 101 05 096 A1 offenbart ein Fugenabdichtungsband zum Abdichten von Bodenfugen, mit einer Klebe- und Abdichtungsschicht, die von Schutzschichten gefasst ist. Mindestens die untere Schutzschicht wird beim Anbringen des Fugenabdichtungsbandes entfernt. Zur Stabilisierung des Fugenabdichtungsbandes ist in die Klebe- und Abdichtungsschicht eine Verstärkungseinlage eingeschlossen, die ein Polyester- oder Metallgewebe umfassen kann.

Die Aufgabe der vorliegenden Erfindung ist, ein Dicht- und Montageband zu stellen, das die oben beschriebenen Nachteile weitestgehend vermeidet und die Praktikabilität bei der Montage und bei einer Erneuerung einer Silikonfuge erhöht. Bekannte Dicht- und Montageband-Anordnungen sollen für später anfallende Erneuerungen einer Silikonfuge sicherer gestaltet und dadurch die Langzeit-Dichtigkeit verbessert sein. Des Weiteren sollen die Herstellungs- und Betriebskosten gegenüber bekannter Dicht- und Montagebänder wenn möglich reduziert sein.

Die Aufgabe wird durch die Merkmale des unabhängigen Patentanspruches 1 gelöst. Die Lösung der Aufgabe besteht in der Integration eines dünnen und flexiblen Schnittschutz-Streifens in eine herkömmliche Mindestanordnung eines Dicht- und Montagebandes. Dieser flexible Schnittschutz-Streifen ist so angeordnet - beispielsweise indem er an der Vorder- oder Rückseite der Trägerfolie angeklebt ist. Vorzugsweise überlappt der flexible Schnittschutz-Streifen sowohl den ersten bzw. oberen Bereich bzw. die erste Klebe- bzw. Dichtfläche, als auch den zweiten bzw. unteren Bereich bzw. die zweite Klebe- und Dichtfläche des Dicht- und Montagebandes teilweise. Mit anderen Wörtern, am Beispiel eines annähernd senkrecht angeordneten Dicht- und Montagebandes zwischen einem Einbaugegenstand und einer Anschlusswand verdeutlicht, überragt die obere Kante des Schnittschutz-Streifens vorzugsweise die untere Kante der rückseitigen Dichtfläche des Dicht- und Montagebandes zu der Anschlusswand und die untere Kante des Schnittschutz-Streifens überragt die obere Kante der vorderseitigen Dichtfläche des Dicht- und Montagebandes zu einer Anschlussfläche der Auf- oder Abbordung des Einbaugegenstandes. Somit ist ein sparsamer Einsatz des Schnittschutz-Materials bei guter Funktionserfüllung gewährleistet, es sind jedoch auch Schnittschutz-Anordnungen möglich, die sich über den kompletten oberen bzw. ersten oder über den kompletten unteren bzw. zweiten Bereich erstrecken, erneut in vorder- oder rückseitig aufgeklebter Form.

Der Schnittschutz-Streifen besteht vorzugsweise aus einer dünnen, flexiblen Metallfolie, die jedoch so widerstandsfähig ist, dass sie mit einem spitzen, scharfen Gegenstand wie z.B. einem Messer oder einem Teppichmesser nicht oder nur sehr schwer zerschnitten werden kann. Die Metallfolie kann auch perforiert sein oder eine Gitterstruktur aufweisen. Als weitere mögliche schnittfeste Materialien kommen Kevlar- oder Carbongewebe oder Duratex in Betracht. Das schnittfeste Material kann generell teil- oder vollflächig an der Vorder- oder Rückseite der Trägerfolie angeklebt sein. Die Trägerfolie ist vorzugsweise elastisch dehnbar, sodass der Schnittschutz-Streifen an seinem erwünschten Anbringungsort verbleiben kann.

Vorzugsweise bei vorgefertigten Sets von Dicht- und Montagebändern, bei denen die Eckbereiche des Einbaugegenstandes vorher festgelegt sind, ist es möglich, den Schnittschutz-Streifen nicht durchgehend über die gesamte Länge des Dicht- und Montagebandes vorzusehen, sondern nur partiell für gefährdete Bereiche, z.B. die Eckbereiche.

Ein sparsamer, weil nur partieller Einsatz des unter Umständen kostenintensiven Schnittschutz-Materials ist mit einer weiteren Ausgestaltungsvariante eines erfindungsgemäßen Dicht- und Montagebandes möglich, das in seiner Trägerfolie mindestens eine Tasche oder mindestens eine Schlaufe ausbildet, in die der Schnittschutz-Streifen vor Ort bei der Montage eingesetzt wird, beispielsweise nur in die Eckbereiche. Die Tasche kann aus einer einzelnen oder aus zwei sich annähernd mittig öffnenden Lippen gebildet sein, welche die Trägerfolie des Dicht- und Montagebandes selbst ausbildet. Die Lippe oder die Lippen können jedoch auch auf die Trägerfolie aufgeklebt sein und stellen so eine gute Nachrüstmöglichkeit für herkömmliche Dicht- und Montagebänder dar.

Überhaupt ist es auch möglich, partiell oder über die gesamte Länge des Dicht- und Montagebandes, einen oder mehrere Schnittschutz-Streifen mittels eines Klebestreifens an der Trägerfolie des Dicht- und Montagebandes anzukleben, der den Schnittschutz-Streifen oder die Schnittschutz-Streifen teilweise überlappt.

Ein erfindungsgemäßer Schnittschutz-Streifen ist des Weiteren mit einem Eckausgleichs-Profil kombinierbar, das in der österreichischen Gebrauchsmusteranmeldung GM 437/2010 des gleichen Anmelders beschrieben ist und gemeinsam mit der österreichischen Prioritäts-Gebrauchsmusteranmeldung GM 438/2010 zu der vorliegenden Anmeldung am gleichen Tag eingereicht worden ist. Das dort beschriebene Dicht- und Montageband ist, wie oben beschrieben, mit einem Schnittschutz-Streifen kombinierbar, aber auch das dort beschriebene Eckausgleichs-Profil selbst kann einen aufgeklebten Schnittschutz-Streifen der oben beschriebenen Art aufweisen.

Des Weiteren ist ein hierin offenbarter Schnittschutz-Streifen wie oben beschrieben mit einer Trägerfolie kombinierbar, wie sie in der Deutschen Gebrauchsmusteranmeldung DE 20 2010 005 018.9 des gleichen Anmelders beschrieben ist. Die Trägerfolie ist dort hinsichtlich ihrer Beschaffenheit nicht außergewöhnlich, aber mit einem zusätzlichen Dichtstreifen bzw. einem Verlängerungs-Dichtstreifen über- oder unterlappend verlängert. Die dort beschriebenen Anbringungsorte des Verlängerungs-Dichtstreifens und die hier offenbarten Anbringungsorte des Schnittschutz-Streifens interferieren nicht und sind somit ohne erfinderisches Zutun kombinierbar.

Die oben zitierte Gebrauchsmusteranmeldung DE 20 2010 005 018.9 offenbart allerdings auch Dicht- und Montagebänder mit einer im montierten Zustand annähernd waagerechten Trägerfläche. Gemäß einer weiteren Ausgestaltungsvariante eines erfindungsgemäßen Dicht- und Montagebandes mit einem Schnittschutz-Streifen kann diese im montierten Zustand annähernd waagerechte Trägerfläche zumindest teilweise selbst aus den oben beschriebenen Schnittschutz-Materialien bestehen, einen oder mehrere eingegossene Schnittschutz-Streifen beinhalten oder einen oder mehrere aufgeklebte Schnittschutz-Streifen aufweisen.

Auch auf diese zuletzt beschriebene Weise ist ein Zerschneiden des Dicht- und Montagebandes beim Wegschneiden der Silikonfuge zuverlässig verhindert. Somit bleibt es fakultativ, ob die Trägerfolie darüber hinaus, wie oben beschrieben, einen zweiten oder mehrere Schnittschutz-Streifen in oder an ihr selbst aufweist.

Eine weitere Ausgestaltungsvariante eines erfindungsgemäßen Dicht- und Montagebandes mit einem Schnittschutz-Streifen für einen annähernd senkrechten Einbau zwischen einem Einbaugegenstand und einer Anschlusswand umfasst eine herkömmlich ausgebildete Trägerfolie mit einer vorderseitigen Klebefläche im zweiten bzw. unteren Bereich und einer rückseitigen Dichtfläche im ersten bzw. oberen Bereich, wobei die Letztere eine Klebefläche sein kann, oder aber auch nur ein Dichtstreifen oder ein Gewirke, der oder das mit Fliesenkleber, einer Dichtschlämme oder einem flüssigen Dichtanstrich aufgetragen wird. Ein Verlängerungs-Dichtstreifen, der den kompletten ersten bzw. oberen Bereich der Trägerfolie überlappt, formt gleichzeitig die vorhin beschriebene, im montierten Zustand annähernd waagerechte Trägerfläche aus. Diese annähernd waagerechte Trägerfläche ist selbst als Schnittschutz-Streifen ausgebildet, indem eines der oben erwähnten Materialien aufgeklebt, eingegossen oder mit dem Verlängerungs-Dichtstreifen verschweißt ist.

Die beschriebenen Ausgestaltungsvarianten eines erfindungsgemäßen Dicht- und Montagebandes mit einem Schnittschutz-Streifen können nach Belieben mit einer Schallsperre oder/und einem Kapillarschutz oder/und einem Unterfütterungsstreifen oder/und einem längsperforierten Schaumstoff-Streifen ergänzt sein. Diese Merkmale sind detailliert in der zitierten Gebrauchsmusteranmeldung DE 20 2010 005 018.9 beschrieben und in der vorliegenden Anmeldung exemplarisch lediglich an einer der folgenden Figuren gezeigt, obwohl sie für alle Ausgestaltungsvarianten fakultativ gültig sind.

Grundsätzlich sind die offenbarten Schnittschutz-Streifen auch - ausschließlich oder zusätzlich zu den bereits beschriebenen Anbringungsorten - in oder an der oben beschriebenen Schallsperre oder/und dem Schaumstoff-Streifen anordenbar.

Sämtliche beschriebenen Ausgestaltungsvarianten eines erfindungsgemäßen Dicht- und Montagebandes sind grundsätzlich auch mit mehreren Schnittschutz-Streifen realisierbar.

Die beschriebenen unterschiedlichen Ausgestaltungsvarianten eines erfindungsgemäßen Dicht- und Montagebandes mit einem oder mehreren Schnittschutz-Streifen sind miteinander kombinierbar. So kann beispielsweise ein Schnittschutz-Streifen sowohl in oder an der Trägerfolie, als auch in oder auf der im montierten Zustand annähernd waagerechten Trägerfläche, als auch in dem beschriebenen Verlängerungs-Dichtstreifen vorgesehen sein.

Die vorliegende Anmeldung offenbart ein Verfahren zur Applikation eines erfindungsgemäßen Dicht- und Montagebandes mit folgenden grundsätzlichen Verfahrensschritten:
- Anbringen eines ersten bzw. unteren Bereiches der Trägerfolie des Dicht- und Montagebandes an eine Anschlussfläche eines Einbaugegenstandes oder an eine erste Wand oder an einen ersten Boden;
- Setzen des Einbaugegenstandes an eine Anschlusswand oder an einen Anschlussboden;
- Anbringen eines zweiten bzw. oberen Bereiches der Trägerfolie des Dicht- und Montagebandes an die Anschlusswand oder den Anschlussboden;
- Befliesen des ersten bzw. oberen Bereiches mittels Fliesen;
- Verfugen des Zwischenraumes zwischen den Fliesen und dem Einbaugegenstand.

Bei der Ausgestaltungsvariante eines erfindungsgemäßen Dicht- und Montagebandes mit einer oder mehreren Taschen oder einer oder mehreren Schlaufen kommt noch vor dem Befliesen das Einsetzen des Schnittschutz-Streifens in die Tasche oder die Taschen oder in die Schlaufe oder die Schlaufen in Betracht.

Ein erfindungsgemäßes Dicht- und Montageband bringt folgende Vorteile:
- Die Dichtigkeit des Dicht- und Montagebandes ist verbessert und hält länger.
- Das Dicht- und Montageband ist widerstandsfähig und robust um einen annähernd mittigen Kern herum und weist flexible, somit gut klebende Oberflächen auf, die sich vom annähernd mittigen Kern weg distal erstrecken.
- Das Dicht- und Montageband kann bei einem Erneuern der Silikonfuge nicht zerschnitten werden.

Weitere oder vorteilhafte Ausgestaltungen eines erfindungsgemäßen Dicht- und Montagebandes bilden die Gegenstände der abhängigen Ansprüche.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Sie stellen schematische und beispielhafte Darstellungen dar und sind nicht maßstabsgetreu, auch in der Relation der einzelnen Bestandteile zueinander nicht. Gleiche Bezugszeichen bedeuten das gleiche Bauteil, Bezugszeichen mit unterschiedlichen Indizes geben funktionsgleiche oder ähnliche Bauteile an.

Es zeigen dabei
Fig. 1 eine beispielhafte erste Ausgestaltungsvariante eines erfindungsgemäßen Dicht- und Montagebandes im montierten Zustand, mit einem aufgeklebten Schnittschutz-Streifen;
Fig. 2 eine beispielhafte zweite Ausgestaltungsvariante eines Dicht- und Montagebandes im montierten Zustand, mit einem eingegossenen Schnittschutz-Streifen;
Fig. 3 eine beispielhafte dritte Ausgestaltungsvariante eines erfindungsgemäßen Dicht- und Montagebandes im montierten Zustand, mit einem Schnittschutz-Streifen, der auf eine annähernd waagerechte Trägerfläche aufgeklebt ist;
Fig. 4 eine beispielhafte vierte Ausgestaltungsvariante eines erfindungsgemäßen Dicht- und Montagebandes im montierten Zustand, bei der die annähernd waagerechte Trägerfläche selbst als Schnittschutz-Streifen ausgestaltet ist;
Fig. 5 eine beispielhafte fünfte Ausgestaltungsvariante eines erfindungsgemäßen Dicht- und Montagebandes, ebenfalls im montierten Zustand, mit einem Schnittschutz-Streifen, der mit einem Verlängerungs-Dichtstreifen verschweißt ist;
Fig. 6 eine beispielhafte sechste Ausgestaltungsvariante eines erfindungsgemäßen Dicht- und Montagebandes, ebenfalls im schematisch dargestellten montierten Zustand, mit einem Schnittschutz-Streifen, der in eine Tasche an der Trägerfolie einsetzbar ist;
Fig. 7 eine beispielhafte siebte Ausgestaltungsvariante eines Dicht- und Montagebandes, ebenfalls im schematisch dargestellten montierten Zustand, das zwischen einem ersten Boden und einem Anschlussboden angeordnet ist;
Fig. 8 eine beispielhafte achte Ausgestaltungsvariante eines Dicht- und Montagebandes, ebenfalls im schematisch dargestellten montierten Zustand, das zwischen einer ersten Wand und einer Anschlusswand angeordnet ist;
Fig. 9 eine beispielhafte neunte Ausgestaltungsvariante eines Dicht- und Montagebandes, ebenfalls im schematisch dargestellten montierten Zustand, das an einem Boden und an einer Anschlusswand angeordnet ist und
Fig. 10 eine beispielhafte zehnte Ausgestaltungsvariante eines Dicht- und Montagebandes, ebenfalls im schematisch dargestellten montierten Zustand, das an einem Boden und an einer Anschlusswand angeordnet ist.

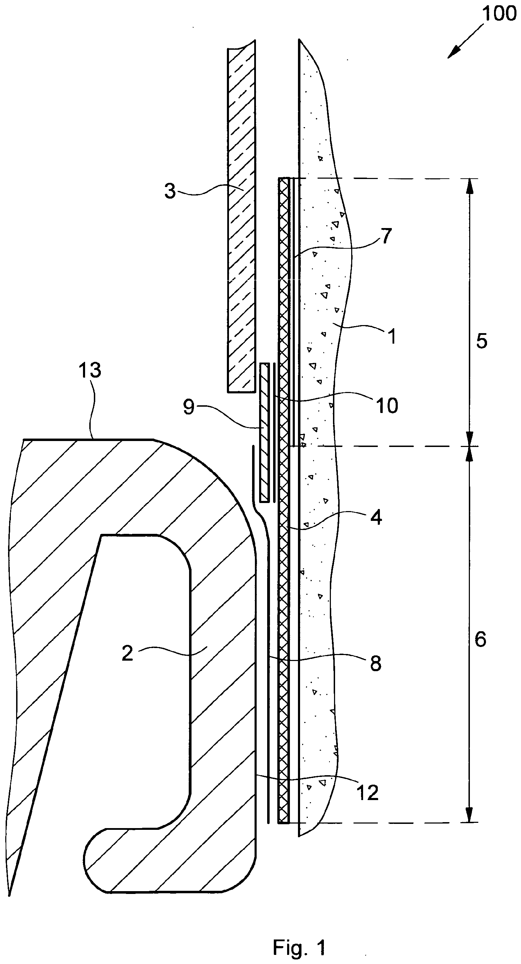

In der Fig. 1 ist eine erste Ausgestaltungsvariante eines erfindungsgemäßen Dicht- und Montagebandes 100 schematisch und geschnitten im montierten Zustand zwischen einer Anschlusswand 1, einer beispielhaften Wannenabbordung 2 und einer Wandfliese 3 dargestellt. Der Fliesenkleber, mit dem die Wandfliese angeklebt ist, oder eine allfällige Dichtschlämme ist der besseren Verständlichkeit der Zeichnung halber weggelassen. Ebenfalls der besseren Verständlichkeit halber sind alle Klebeflächen symbolisch lediglich mittels einer Linie dargestellt, die leicht beabstandet von den sie im montierten Zustand eigentlich bündig verbindenden Materialien eingezeichnet ist.

Das Dicht- und Montageband 100 umfasst eine Trägerfolie 4, die sich in einen ersten bzw. oberen Bereich 5 und einen zweiten bzw. unteren Bereich 6 unterteilt. Der erste bzw. obere Bereich 5 der Trägerfolie 4 ist mit einer rückseitigen Klebefläche 7 an der Anschlusswand 1 befestigt. Der zweite bzw. untere Bereich 6 ist, einer Mindestausführung eines herkömmlichen Dicht- und Montagebandes entsprechend, mit einer vorderseitigen Klebefläche 8 an einer annähernd senkrechten Anschlussfläche 12 der Wannenabbordung 2 angeklebt. Bei allen in der vorliegenden Anmeldung offenbarten Ausgestaltungsvarianten ist es auch möglich, diese Klebefläche 8 im vormontierten Zustand nicht an der Trägerfolie 4, sondern im Vorhinein an der annähernd senkrechten Fläche 12 der Wannenabbordung 2 vorzusehen. Die in der vorliegenden Anmeldung beanspruchten Ergebnisse des fertig montierten Zustandes eines Dicht- und Montagebandes bleiben dadurch unverändert.

Ein Schnittschutz-Streifen 9 ist mittels einer Klebefläche 10 an der Trägerfolie 4 angeordnet, und zwar so, dass die Klebefläche 8 teilweise unterlappt wird, bzw. die Mitte des Schnittschutz-Streifens 9 ca. der Höhe einer annähernd waagerechten Fläche 13 der Wannenabbordung 2 entspricht. Der Schnittschutz-Streifen 9 überlappt sowohl den ersten bzw. oberen Bereich 5 der Trägerfolie 4, als auch den zweiten bzw. unteren Bereich 6 der Trägerfolie 4 jeweils teilweise.

Der Schnittschutz-Streifen 9 besteht vorzugsweise aus einer dünnen und flexiblen Metallfolie. Falls der Schnittschutz-Streifen 9 im Querschnitt in etwa so dick wie abgebildet sein sollte, so bietet es sich an, fakultativ einen etwa gleich dicken Unterfütterungsstreifen unterhalb des Schnittschutz-Streifens 9 anzuordnen, ebenfalls mit einer Klebefläche 10 zu der Vorderseite der Trägerfolie 4, oder mit einer den zweiten bzw. unteren Bereich 6 der Trägerfolie 4 komplett abdeckenden Klebefläche.

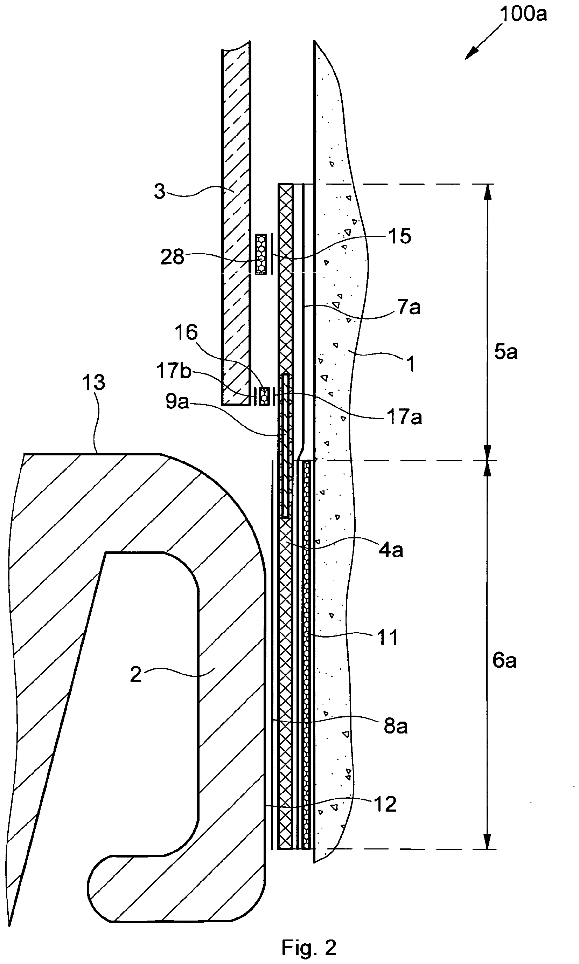

Die Fig. 2 zeigt eine schematische Schnittdarstellung einer zweiten Ausgestaltungsvariante eines Dicht- und Montagebandes 100a im montierten Zustand, ebenfalls zwischen der Anschlusswand 1, der beispielhaften Wannenabbordung 2 und der Wandfliese 3 aus der Fig. 1.

Das dargestellte Dicht- und Montageband 100a umfasst grundsätzlich dieselbe Anordnung einer Trägerfolie 4a mit einem ersten bzw. oberen Bereich 5a, einem zweiten bzw. unteren Bereich 6a und einem Schnittschutz-Streifen 9a, der dieses Mal jedoch im Unterschied zu der Fig. 1 nicht aufgeklebt, sondern in das Material der Trägerfolie 4a eingegossen ist.

Optional zu der Ausgestaltungsvariante eines Dicht- und Montagebandes 100a, sowie auch zu der vorigen Ausgestaltungsvariante eines erfindungsgemäßen Dicht- und Montagebandes 100 aus der Fig. 1 und den noch folgenden Ausgestaltungsvarianten eines Dicht- und Montagebandes 100b-100i kann eine dämmende Schallsperre 11 mit einer eigenen Klebefläche an der Rückseite der Trägerfolie 4a oder mit einer durchgehenden Klebefläche 7a angeordnet sein. Ebenfalls optional zu dieser Ausgestaltungsvariante, aber auch zu allen anderen, kann ein Unterfütterungs-Streifen 28 mittels einer Klebefläche 15 an der Vorderseite des ersten bzw. oberen Bereiches 5a der Trägerfolie 4a angeordnet sein. Er dient der Unterfütterung der Wandfliese 3.

Ebenfalls optional zu der gezeigten Ausgestaltungsvariante, aber auch zu allen anderen, kann ein Kapillarschutz-Streifen 16 vorgesehen sein, der mittels einer Klebefläche 17a an der Vorderseite der Trägerfolie 4a angeklebt ist, und zwar vorzugsweise in so einer Höhe, dass die Unterkante der Wandfliese 3 in etwa bündig mittels einer Klebefläche 17b mit dem Kapillarschutz-Streifen 16 verklebt werden kann.

Optional zu dieser Ausgestaltungsvariante eines Dicht- und Montagebandes 100a, aber auch zu den Ausgestaltungsvarianten eines erfindungsgemäßen Dicht- und Montagebandes 100, 100b-100e und den nachfolgenden Ausgestaltungsvarianten 100f-100i, kann ein Verlängerungs-Dichtstreifen vorgesehen sein, der mittels einer Klebefläche an der Trägerfolie 4a und an der Anschlusswand 1 bzw. an einem Anschlussboden bzw. an einem zweiten Einbaugegenstand angeklebt ist.

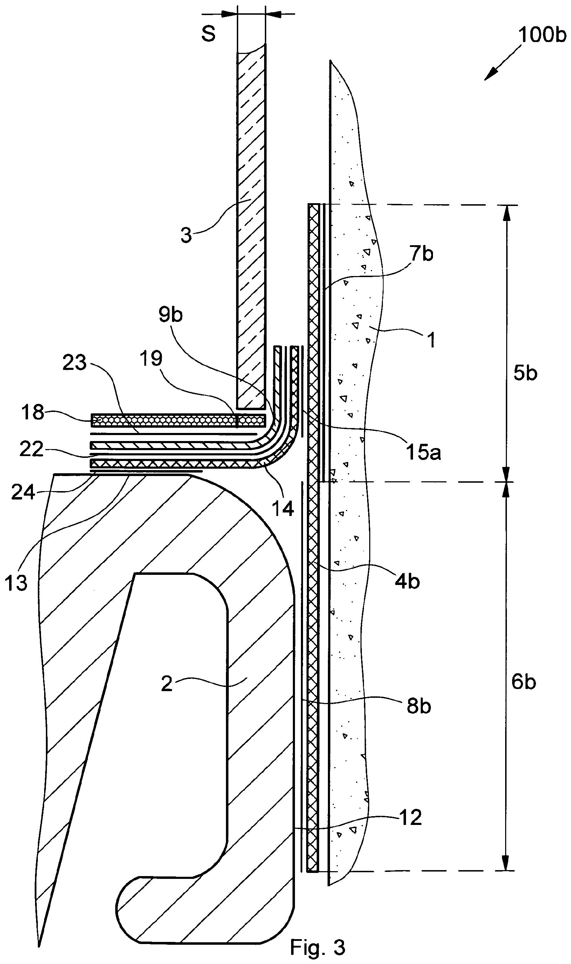

In der Fig. 3 ist ebenfalls schematisch und in einer Schnittdarstellung eine vierte Ausgestaltungsvariante eines erfindungsgemäßen Dicht- und Montagebandes 100b gezeigt, und zwar im montierten Zustand zwischen der Anschlusswand 1, der Wannenabbordung 2 und der Wandfliese 3. Eine Trägerfolie 4b bildet einen ersten bzw. oberen Bereich 5b und einen zweiten bzw. unteren Bereich 6b und ist mittels einer Klebefläche 7b an der Anschlusswand 1 und mittels einer Klebefläche 8b an der annähernd senkrechten Fläche 12 der Wannenabbordung 2 angeklebt.

In Form eines Abbuges ist eine annähernd waagerechte Trägerfläche 14 mittels einer Klebefläche 15a an der Trägerfolie 4b befestigt und mit einer Klebefläche 24 an der annähernd waagerechten Fläche 13 der Wannenabbordung 2. Mittels einer weiteren Klebefläche 22 ist ein Schnittschutz-Streifen 9b angeklebt und auf diesem wiederum mittels einer Klebefläche 23 ein Schaumstoff-Streifen 18, der eine Längsperforation 19 aufweist. Die Anordnung der Längsperforation 19 entspricht vorzugsweise einer Stärke S der Wandfliese 3.

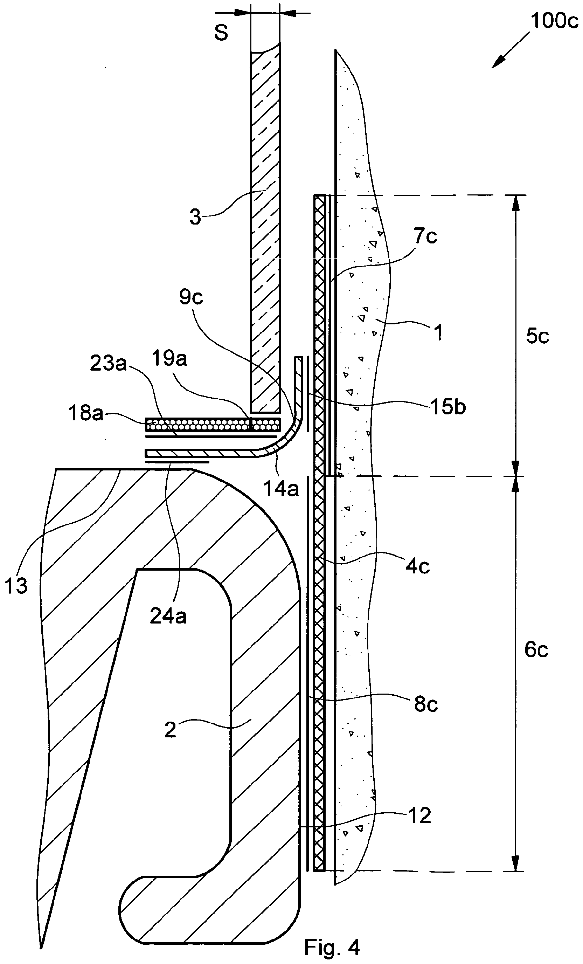

In der Fig. 4 ist schematisch und geschnitten eine vierte Ausgestaltungsvariante eines erfindungsgemäßen Dicht- und Montagebandes 100c dargestellt. Eine Trägerfolie 4c mit einem ersten bzw. oberen Bereich 5c und einem zweiten bzw. unteren Bereich 6c ist mittels einer Klebefläche 7c an der Anschlusswand 1 und mittels einer Klebefläche 8c an der annähernd senkrechten Fläche 12 der Wannenabbordung 2 angeordnet. In Gestalt eines Abbuges ist eine annähernd waagerechte Trägerfläche 14a mittels einer Klebefläche 15b an der Trägerfolie 4c und mittels einer Klebefläche 24a an der annähernd waagerechten Fläche 13 der Wannenabbordung 2 angeklebt.

Die annähernd waagerechte Trägerfläche 14a ist selbst gleichzeitig ein Schnittschutz-Streifen 9c. Ein Schaumstoff-Streifen 18a ist mittels einer Klebefläche 23a an der Oberseite der annähernd waagerechten Trägerfläche 14a aufgeklebt. Dieser Schaumstoff-Streifen 18a weist eine Längsperforation 19a auf, die in einem Abstand angeordnet ist, welcher der Stärke S der Wandfliese 3 entspricht.

Die in den Fig. 3 und 4 offenbarten annähernd waagerechten Trägerflächen 14 und 14a und die entsprechend angeordneten Schnittschutz-Streifen 9b und 9c können auch nach unten abgewinkelt ausgestaltet sein und an den jeweiligen zweiten bzw. unteren Bereichen 6b und 6c angeordnet sein.

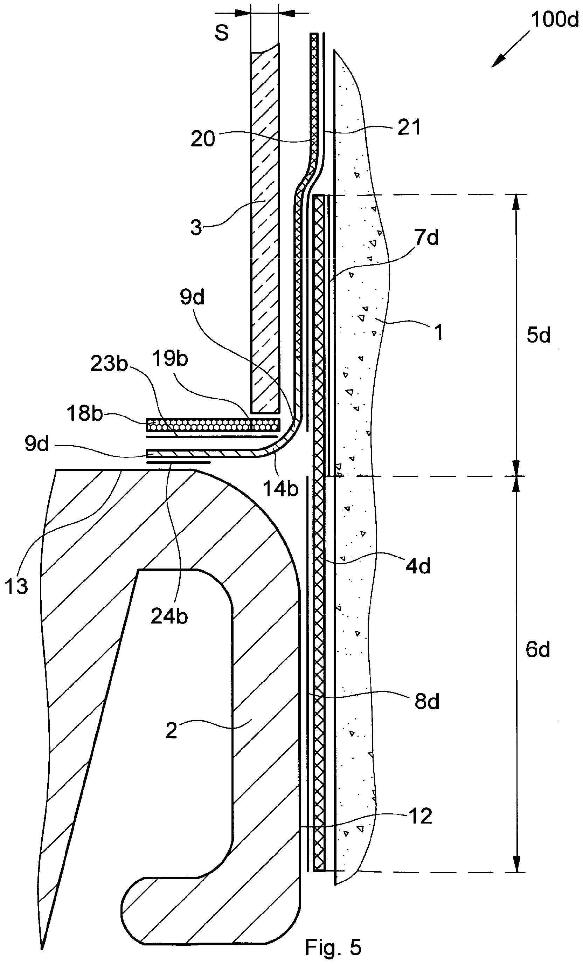

Die Fig. 5 zeigt schematisch und geschnitten eine fünfte Ausgestaltungsvariante eines erfindungsgemäßen Dicht- und Montagebandes 100d. Ein erster bzw. oberer Bereich 5d einer Trägerfolie 4d ist mittels einer Klebefläche 7d an der Anschlusswand 1 und ein zweiter bzw. unterer Bereich 6d Trägerfolie 4d ist mittels einer Klebefläche 8d an der annähernd senkrechten Fläche 12 der Wannenabbordung 2 angeordnet.

Der erste bzw. obere Bereich 5d der Trägerfolie 4d ist mit einem Verlängerungs-Dichtstreifen 20 und einer Klebefläche 21 überlappt. An den Verlängerungs-Dichtstreifen 20 ist ein Schnittschutz-Streifen 9d angeschweißt, der wiederum gleichzeitig eine annähernd waagerechte Trägerfläche 14b ausbildet. Die Unterseite der annähernd waagerechten Trägerfläche 14b ist mittels einer Klebefläche 24b mit der annähernd waagerechten Fläche 13 der Wannenabbordung 2 verklebt und an der Oberseite der annähernd waagerechten Trägerfläche 14b ist mittels einer Klebefläche 23b ein Schaumstoff-Streifen 18b mit einer Längsperforation 19b angeklebt.

Die Schaumstoff-Streifen 18, 18a und 18b in den Figuren 3 bis 5 müssen nicht zwingend angeordnet sein, sind jedoch Bestandteil einer bevorzugten Ausgestaltung, die besser haftende Silikonfugen ergibt.

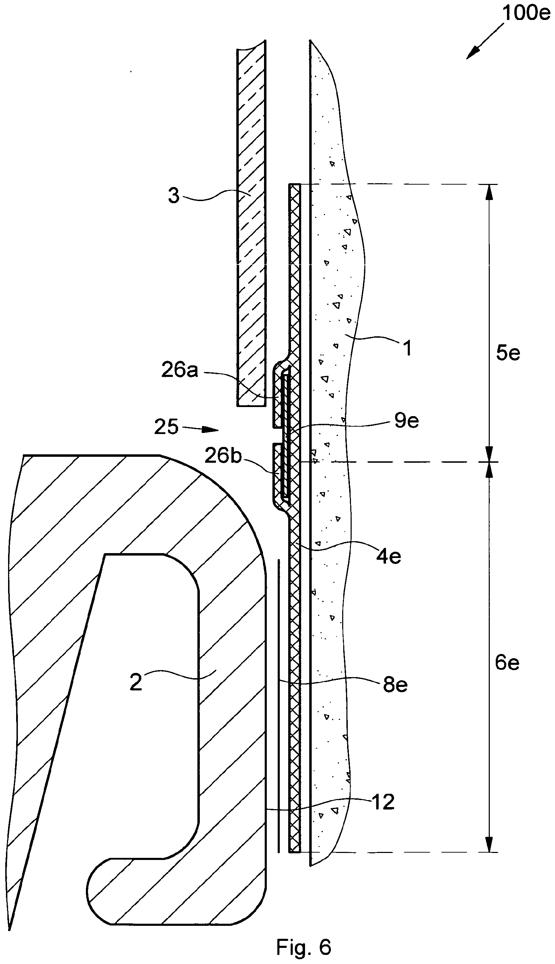

In der Fig. 6 ist ebenfalls schematisch und in einer Schnittdarstellung eine beispielhafte sechste Ausgestaltungsvariante eines erfindungsgemäßen Dicht- und Montagebandes 100e gezeigt, und zwar im montierten Zustand zwischen der Anschlusswand 1, der Wannenabbordung 2 und der Wandfliese 3. Eine Trägerfolie 4e bildet einen ersten bzw. oberen Bereich 5e und einen zweiten bzw. unteren Bereich 6e. Lediglich der zweite bzw. untere Bereich 6e ist mittels einer Klebefläche 8e an der annähernd senkrechten Fläche 12 der Wannenabbordung 2 angeklebt. Der erste bzw. obere Bereich 5e ist vorzugsweise aufgrund seiner Beschaffenheit als Gewirke mittels des Fliesenklebers, einer Dichtschlämme oder eines flüssigen Dichtanstriches auf die Anschlusswand 1 anbringbar.

Die Trägerfolie 4e formt mittels einer oberen Lippe 26a und einer unteren Lippe 26b eine Tasche 25 aus, in die - wahlweise auch erst vor Ort, bei der Montage und wahlweise nur in bestimmten Bereichen - durch Wegklappen der Lippen 26a und 26b ein Schnittschutz-Streifen 9e einsetzbar ist.

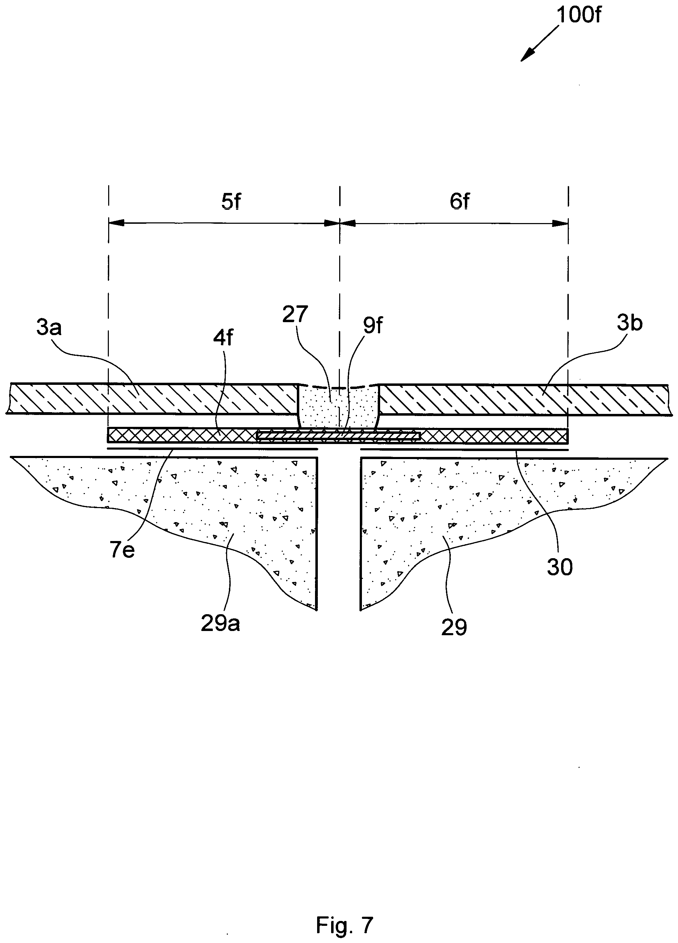

In der Fig. 7 ist schematisch und in einer Schnittdarstellung eine beispielhafte siebte Ausgestaltungsvariante eines Dicht- und Montagebandes 100f gezeigt, und zwar im montierten Zustand zwischen einem ersten Boden 29, einem Anschlussboden 29a und Bodenfliesen 3a und 3b. Eine Trägerfolie 4f bildet einen ersten Bereich 5f und einen zweiten Bereich 6f. Der erste Bereich 5f ist mittels einer Klebefläche 7e mit dem Anschlussboden 29a verbunden und der zweite Bereich 6f ist mittels einer Klebefläche 30 mit dem ersten Boden 29 verbunden. Statt der Klebeflächen 7e und 30 kann jeweils auch ein Auftragen mittels einer Dichtschlämme oder mittels eines flüssigen Dichtanstriches in Betracht kommen.

An der Trägerfolie 4f kann ein Schnittschutz-Streifen 9f oben oder unten angeklebt sein oder, wie dargestellt, in die Trägerfolie 4f eingegossen sein, und zwar annähernd mittig, sodass das Dicht- und Montageband 100f beim Wegschneiden einer Silikonfuge 27 nicht durchtrennt werden kann.

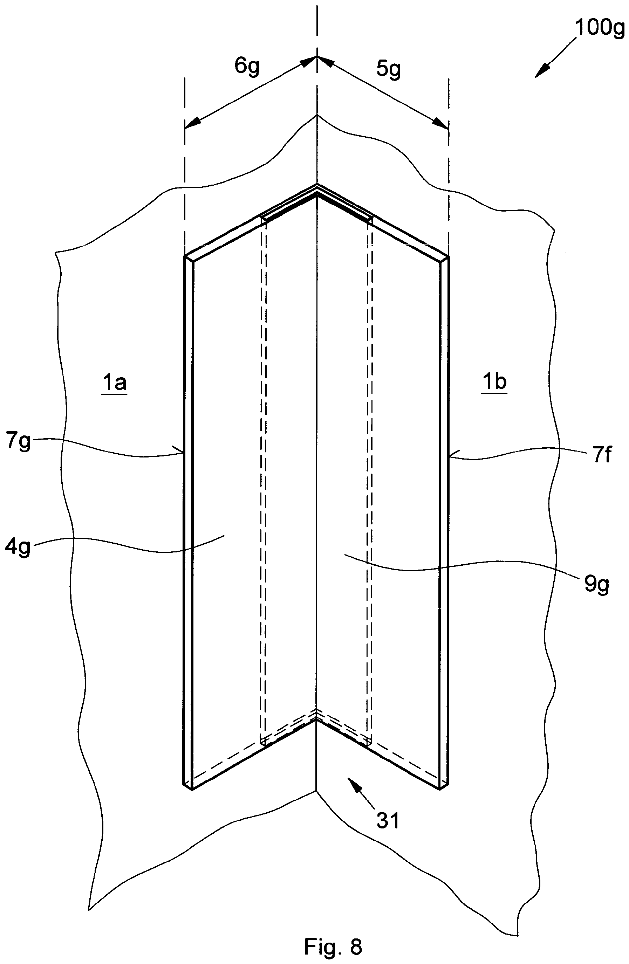

In der Fig. 8 ist schematisch eine beispielhafte achte Ausgestaltungsvariante eines Dicht- und Montagebandes 100g gezeigt, und zwar im montierten Zustand zwischen einer ersten Wand 1a und einer Anschlusswand 1b. Eine Trägerfolie 4g bildet einen ersten Bereich 5g und einen zweiten Bereich 6g. Der erste Bereich 5g ist mittels einer Klebefläche 7f mit der Anschlusswand 1b verbunden und der zweite Bereich 6g ist mittels einer Klebefläche 7g mit der ersten Wand 1a verbunden. Statt der Klebeflächen 7f und 7g kann jeweils auch ein Auftragen mittels einer Dichtschlämme oder mittels eines flüssigen Dichtanstriches in Betracht kommen.

An der Trägerfolie 4g kann ein Schnittschutz-Streifen 9g vorne oder hinten angeklebt sein oder - wie dargestellt - in die Trägerfolie 4g eingegossen sein, und zwar annähernd mittig entlang einer Eckkante 31. Eine Silikon-Eckenfuge, die nach dem Fliesenlegen über den ersten Bereich 5g und den zweiten Bereich 6g entlang der Eckkante 31 angebracht wird, ist somit mit dem Schnittschutz-Streifen 9g unterfüttert. Der Schnittschutz-Streifen 9g kann so flexibel sein, dass er in die Eckkante 31 eingeschmiegt werden kann, er kann aber auch ein im Querschnitt annähernd rechtwinkliges Schnittschutz-Profil sein.

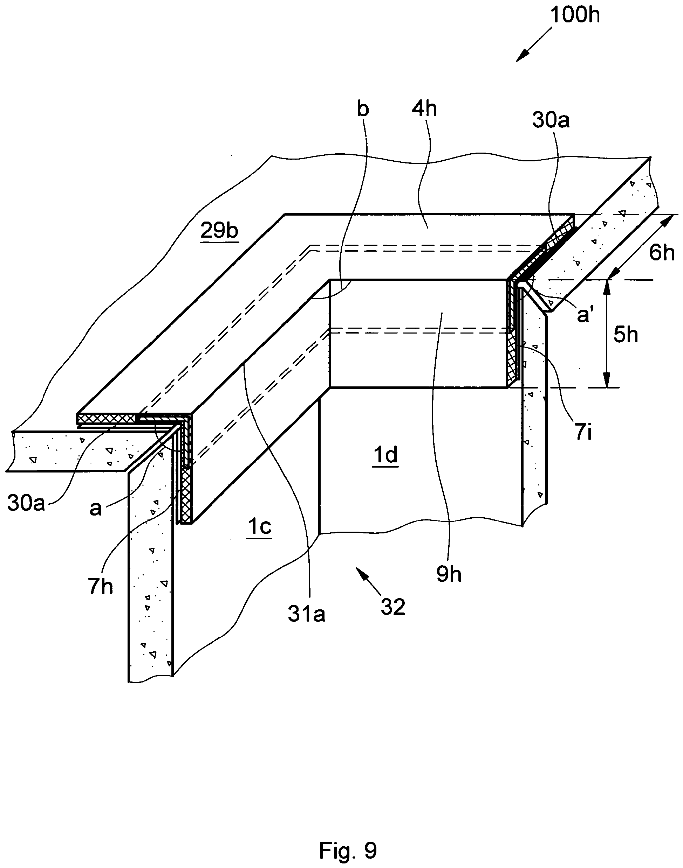

In der Fig. 9 ist schematisch und in einer Schnittdarstellung eine beispielhafte neunte Ausgestaltungsvariante eines Dicht- und Montagebandes 100h gezeigt, und zwar im montierten Zustand an einem ersten Boden 29b, an einer ersten Anschlusswand 1c und an einer zweiten Anschlusswand 1d, wobei der erste Boden 29b gemeinsam für beide Anschlusswände 1c und 1d ist. Eine Trägerfolie 4h bildet einen ersten Bereich 5h und einen zweiten Bereich 6h. Der erste Bereich 5h ist mittels einer Klebefläche 7h mit der ersten Anschlusswand 1c verbunden und mittels einer Klebefläche 7i mit der zweiten Anschlusswand 1d. Der zweite Bereich 6h ist mittels einer Klebefläche 30a mit dem ersten Boden 29b verbunden. Statt der Klebeflächen 7h, 7i und 30a kann jeweils auch ein Auftragen mittels einer Dichtschlämme oder mittels eines flüssigen Dichtanstriches in Betracht kommen.

An der Trägerfolie 4h kann ein Schnittschutz-Streifen 9h vorne oder hinten angeklebt sein oder, wie dargestellt, in die Trägerfolie 4h eingegossen sein, und zwar annähernd mittig, sodass eine nach dem Fliesenlegen verbleibende Eckkante 31a verstärkt bzw. mit dem Schnittschutz-Streifen 9h unterfüttert ist.

Der Schnittschutz-Streifen 9h kann ein flexibler Schnittschutz-Streifen sein oder aber auch ein Schnittschutz-Profil, das einen Winkel a zwischen dem ersten Boden 29b und der ersten Anschlusswand 1c bzw. einen Winkel a' zwischen dem ersten Boden 29b und der zweiten Anschlusswand 1d oder/und einen Winkel b zwischen der ersten Anschlusswand 1c und der zweiten Anschlusswand 1d von vornherein ausformt. Die Winkel a und a' müssen hierbei nicht identisch sein.

Die in dieser Fig. 9 gezeigte Ausgestaltungsvariante eines Dicht- und Montagebandes 100h ist für eine Innenecke 32 geeignet, die aus dem ersten Boden 29b und den zwei Anschlusswänden 1c und 1d gebildet ist. In diese Innenecke 32 kann optional ein nicht näher dargestellter Einbaugegenstand eingesetzt werden, dessen Anschlussflächen an den Anschlusswänden 1c und 1d anliegt. Das Dicht- und Montageband 100h kann sich alternativ oder zusätzlich über die Anschlussflächen des Einbaugegenstandes erstrecken.

Des Weiteren ist eine entsprechend abgewandelte Form der dargestellten Ausgestaltungsvariante eines Dicht- und Montagebandes 100h möglich, die nicht für eine Innenecke, sondern für eine aus einem ersten Boden und zwei Anschlusswänden gebildeten Außenecke vorgesehen ist. Mit anderen Wörtern beträgt der Winkel b dann nicht annähernd 90 Grad, sondern annähernd 270 Grad. Der erste Boden kann hierbei an der Unterkante, aber auch an der Oberkante der Anschlusswände anschließen. Ebenso kann der erste Boden 29b an einer Unterkante der Anschlusswände 1c und 1d anschließen, d.h., dass der Winkel a dann nicht annähernd 90 Grad, sondern 270 Grad beträgt.

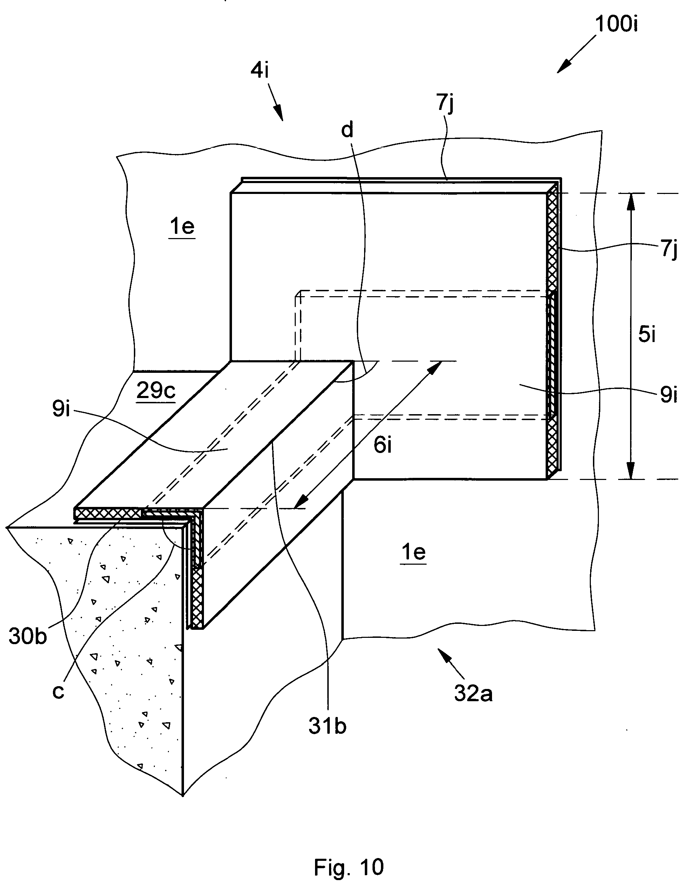

In der Fig. 10 ist schematisch und in einer Schnittdarstellung eine beispielhafte zehnte Ausgestaltungsvariante eines Dicht- und Montagebandes 100i gezeigt, und zwar im montierten Zustand zwischen einem ersten Boden 29c und einer Anschlusswand 1e. Eine Trägerfolie 4i bildet einen ersten Bereich 5i und einen zweiten Bereich 6i. Der erste Bereich 5i ist mittels einer Klebefläche 7j mit der Anschlusswand 1e verbunden und der zweite Bereich 6i ist mittels einer Klebefläche 30b mit dem ersten Boden 29c verbunden. Statt der Klebeflächen 7j und 30b kann jeweils auch ein Auftragen mittels einer Dichtschlämme oder mittels eines flüssigen Dichtanstriches in Betracht kommen.

An der Trägerfolie 4i kann ein Schnittschutz-Streifen 9i oben oder unten angeklebt sein oder, wie dargestellt, in die Trägerfolie 4i eingegossen sein.

Der Schnittschutz-Streifen 9i kann ein flexibler Schnittschutz-Streifen sein oder aber auch ein Schnittschutz-Profil, das einen Winkel c an einer Eckkante 31b des ersten Bodens 29c oder/und einen Winkel d zwischen dem ersten Boden 29c und der Anschlusswand 1e von vornherein ausformt.

In eine so gebildete Innenecke 32a kann ein Einbaugegenstand eingesetzt werden, dessen Anschlussflächen alternativ oder zusätzlich von dem Dicht- und Montageband 100i miterfasst werden. Die Fig. 10 zeigt ausschnittsweise eine Ausgestaltungsvariante eines Dicht- und Montagebandes 100i, das für einen ersten Boden 29c und eine daran rechts anschließende Anschlusswand 1e vorgesehen ist. Eine entsprechend spiegelverkehrte Ausgestaltungsvariante mit einem ersten Boden 29c, an den die Anschlusswand links anschließt, ist hiermit ebenfalls offenbart, sei es als separate Ausgestaltungsvariante oder als eine mit der dargestellten verbundenen.

### Bezugszeichenliste

- 1, 1a-1e: - erste Wand, Anschlusswand
- 2: - Wannenabbordung, Einbaugegenstand
- 3, 3a, 3b: - Wand- oder Bodenfliese
- 4, 4a-4i: - Trägerfolie, Trägermaterial, Trägerstreifen, Trägerprofil
- 5, 5a-5i: - erster bzw. oberer Bereich von 4, erste Klebe- bzw. Dichtfläche
- 6, 6a-6i: - zweiter bzw. unterer Bereich von 4, zweite Klebe- bzw. Dichtfläche
- 7, 7a-7j: - rückseitige Klebefläche von 4 zu 1
- 8, 8a-8e: - vorderseitige Klebefläche von 4 zu 2
- 9, 9a-9i: - Schnittschutz, Schnittschutz-Streifen, Schnittschutz-Profil
- 10: - Klebefläche von 9 zu 4
- 11: - Schallsperre
- 12: - annähernd senkrechte Fläche von 2, Anschlussfläche
- 13: - annähernd waagerechte Fläche von 2
- 14, 14a, 14b: - annähernd waagerechte Trägerfläche
- 15, 15a, 15b: - Klebefläche von 28 bzw. 14 zu 4
- 16: - Kapillarschutz-Streifen
- 17a, 17b: - Klebefläche von 16 zu 4 bzw. 3
- 18, 18a, 18b: - Schaumstoff-Streifen
- 19, 19a, 19b: - Längsperforation
- 20: - Verlängerungs-Dichtstreifen
- 21: - Klebefläche von 20 zu 4 bzw. 1
- 22: - Klebefläche von 9b zu 14
- 23, 23a, 23b: - Klebefläche von 18 zu 14
- 24, 24a, 24b: - Klebefläche von 14 zu 13 bzw. 2
- 25: - Tasche
- 26a: - obere Lippe
- 26b: - untere Lippe
- 27: - Silikonfuge
- 28: - Unterfütterungs-Streifen
- 29, 29a-29c: - erster Boden, Anschlussboden
- 30, 30a, 30b: - Klebefläche von 4 zu 29
- 31, 31a, 31b: - Eckkante
- 32, 32a: - Innenecke

- 100, 100a-100i: - Dicht- und Montageband

- a, a', b-d: - Winkel
- S: - Stärke von 3

## Patentansprüche

1. Dicht- und Montageband (100, 100a-100i), wobei das Dicht- und Montageband (100, 100a-100i) eine Trägerfolie (4, 4a-4i) aus einem ersten, biegsamen Material umfasst, und wobei die Trägerfolie (4, 4a-4i) mindestens einen ersten bzw. oberen Bereich (5, 5a-5i) und mindestens einen zweiten bzw. unteren Bereich (6, 6a-6i) bildet und wobei das Dicht- und Montageband (100, 100a-100i) im montierten Zustand mit dem zweiten bzw. unteren Bereich (6, 6a-6i) an eine Anschlussfläche (12) eines Einbaugegenstandes (2) oder an eine erste Wand (1a) oder an einen ersten Boden (29) und mit dem ersten bzw. oberen Bereich (5f-5i) an einen Anschlussboden (29a) oder an eine Anschlusswand (1, 1b-1e) anbringbar ist, **dadurch gekennzeichnet, dass** das Dicht- und Montageband (100, 100b-100e) mindestens einen an einer Vorder- bzw. Oberseite oder Rück- bzw. Unterseite der flexiblen Trägerfolie (4, 4b-4e) angeordneten Schnittschutz-Streifen (9, 9b-9e) aus einem zweiten, flexiblen Material umfasst und wobei das zweite, flexible Material schnittfest ist.

2. Dicht- und Montageband (100, 100b-100d) nach Anspruch 1, **dadurch gekennzeichnet, dass** der flexible Schnittschutz-Streifen (9, 9b-9d) an einer Vorderseite oder an einer Rückseite der Trägerfolie (4, 4b-4d) mittels einer Klebefläche (10, 15a, 15b, 21) angeklebt ist.

3. Dicht- und Montageband (100, 100e) nach einem der vorhergehenden Ansprüche, **dadurch gekennzeichnet, dass** der flexible Schnittschutz-Streifen (9, 9e) den ersten bzw. oberen Bereich (5, 5e) und den zweiten bzw. unteren Bereich (6, 6e) teilweise überlappt.

4. Dicht- und Montageband nach einem der vorhergehenden Ansprüche, **dadurch gekennzeichnet, dass** der flexible Schnittschutz-Streifen mindestens den ersten bzw. oberen Bereich komplett abdeckt oder den zweiten bzw. unteren Bereich komplett abdeckt.

5. Dicht- und Montageband (100, 100a-100i) nach einem der vorhergehenden Ansprüche, **dadurch gekennzeichnet, dass** der Schnittschutz-Streifen (9, 9a-9i) ein Schnittschutz-Streifen in Form mindestens einer flexiblen Metallfolie ist.

6. Dicht- und Montageband (100, 100a-100i) nach Anspruch 5, **dadurch gekennzeichnet, dass** die flexible Metallfolie (9, 9a-9i) mit einem Messer oder einem Teppichmesser nicht oder nur sehr schwer zerschneidbar ist.

7. Dicht- und Montageband (100, 100a-100i) nach einem der vorhergehenden Ansprüche 5 oder 6, **dadurch gekennzeichnet, dass** die flexible Metallfolie (9, 9a-9i) perforiert ist.

8. Dicht- und Montageband (100, 100a-100i) nach einem der vorhergehenden Ansprüche 5-7, **dadurch gekennzeichnet, dass** die flexible Metallfolie (9, 9a-9i) eine Gitterstruktur aufweist.

9. Dicht- und Montageband (100, 100a-100i) nach einem der vorhergehenden Ansprüche 1-4, **dadurch gekennzeichnet, dass** der Schnittschutz-Streifen (9, 9a-9i) ein Schnittschutz-Streifen in Form mindestens eines flexiblen Kevlar- oder Carbon-Gewebes ist.

10. Dicht- und Montageband (100, 100a-100i) nach einem der vorhergehenden Ansprüche, **dadurch gekennzeichnet, dass** die Trägerfolie (4, 4a-4i) elastisch dehnbar ist.

11. Dicht- und Montageband (100, 100a-100i) nach einem der vorhergehenden Ansprüche, **dadurch gekennzeichnet, dass** der Schnittschutz-Streifen (9, 9a-9i) in der Längsausrichtung des Dicht- und Montagebandes (100, 100a-100i) nur partiell an dem Dicht- und Montageband (100, 100a-100i) angeordnet ist.

12. Dicht- und Montageband (100e) nach einem der vorhergehenden Ansprüche 1 oder 3-11, **dadurch gekennzeichnet, dass** der Schnittschutz-Streifen (9e) in mindestens eine Tasche (25) oder mindestens eine Schlaufe einsetzbar ist.

13. Dicht- und Montageband (100b) nach einem der vorhergehenden Ansprüche, **dadurch gekennzeichnet, dass** der Schnittschutz-Streifen (9b) mindestens teilweise an einer im montierten Zustand des Dicht- und Montagebandes (100b) annähernd waagerechten Trägerfläche (14) angeordnet ist.

14. Dicht- und Montageband (100c, 100d) nach einem der vorhergehenden Ansprüche 1-12, **dadurch gekennzeichnet, dass** der Schnittschutz-Streifen (9c, 9d) im montierten Zustand des Dicht- und Montagebandes (100c, 100d) selbst eine annähernd waagerechte Trägerfläche (14a, 14b) ausbildet.

15. Dicht- und Montageband (100d) nach einem der vorhergehenden Ansprüche, **dadurch gekennzeichnet, dass** der Schnittschutz-Streifen (9d) an einem die Trägerfolie (4d) überlappendem Verlängerungs-Dichtstreifen (20) angeordnet ist.

16. Dicht- und Montageband (100a) nach einem der vorhergehenden Ansprüche, **dadurch gekennzeichnet, dass** das Dicht- und Montageband (100a) eine Schallsperre (11) umfasst.

17. Dicht- und Montageband (100a) nach einem der vorhergehenden Ansprüche, **dadurch gekennzeichnet, dass** das Dicht- und Montageband (100a) einen Kapillarschutz-Streifen (16) umfasst.

18. Dicht- und Montageband (100a) nach einem der vorhergehenden Ansprüche, **dadurch gekennzeichnet, dass** das Dicht- und Montageband (100a) einen Unterfütterungs-Streifen (28) umfasst.

19. Dicht- und Montageband (100b-100d) nach einem der vorhergehenden Ansprüche, **dadurch gekennzeichnet, dass** das Dicht- und Montageband (100b-100d) einen Schaumstoff-Streifen (18, 18a, 18b) mit einer Längsperforation (19, 19a, 19b) umfasst.

20. Verfahren mit einem Dicht- und Montageband (100, 100a-100i) nach einem der vorhergehenden Ansprüche, **dadurch gekennzeichnet, dass** folgende Verfahrensschritte ausgeführt werden:
a) Anbringen eines zweiten bzw. unteren Bereiches (6, 6a-6i) einer Trägerfolie (4, 4a-4i) des Dicht- und Montagebandes (100, 100a-100i) an eine Anschlussfläche (12) eines Einbaugegenstandes (2) oder an eine erste Wand (1a) oder an einen ersten Boden (29) ;
b) Setzen des Einbaugegenstandes (2) an einen Anschlussboden (29a-29c) oder eine Anschlusswand (1, 1b-1e);
c) Anbringen eines ersten bzw. oberen Bereiches (5, 5a-5i) der Trägerfolie (4, 4a-4i) des Dicht- und Montagebandes (100, 100a-100i) an den Anschlussboden (29a-29c) oder die Anschlusswand (1, 1b-1e);
d) Befliesen des ersten bzw. oberen Bereiches (5, 5a-5i) mittels Fliesen (3, 3a, 3b);
e) Verfugen eines Zwischenraumes zwischen den Fliesen (3, 3a, 3b) und dem Einbaugegenstand (2).

21. Verfahren für die Applikation des Dicht- und Montagebandes (100e) nach Anspruch 20 und einem der vorhergehenden Ansprüche 1, 3-12 oder 16-19, **dadurch gekennzeichnet, dass** zwischen den Verfahrensschritten c) und d) folgender Verfahrensschritt eingefügt ist:
aa) Einsetzen eines Schnittschutz-Streifens (9e) in mindestens eine Tasche (25) oder mindestens eine Schlaufe des Dicht- und Montagebandes (100e).

## Claims

1. Sealing and assembly strip (100, 100a-100i), comprising a carrier foil (4, 4a-4i) out of a first, flexible material, and wherein the carrier foil (4, 4a-4i) forms at least a first respectively upper area (5, 5a-5i) and at least a second respectively lower area (6, 6a-6i) and wherein the sealing and assembly strip (100, 100a-100i) in the assembled state is placeable with the second respectively lower area (6, 6a-6i) onto a connection surface (12) of a built-in object (2), or to a first wall (1a) or onto a first floor (29), and with the first respectively upper area (5f-5i), onto a connection floor (29a) or on a connection wall (1, 1b-1e), **characterized in that** the sealing and assembly strip (100, 100b-100e) comprises at least a cut protection strip (9, 9b-9e) arranged on a front side respectively upper side or rear side respectively underside of the flexible carrier foil (4, 4b-4e) and wherein the cut protection strip (9, 9b-9e) is made out of a second, flexible material and wherein the second, flexible material is cut-resistant.

2. Sealing and assembly strip (100, 100b-100d) according to claim 1, **characterized in that** the flexible cut protection strip (9, 9b-9d) is glued on a front side or on a rear side of the carrier foil (4, 4b-4d) by means of an adhesive surface (10, 15a, 15b, 21).

3. Sealing and assembly strip (100, 100e) according to one of the preceding claims, **characterized in that** the flexible cut protection strip (9, 9e) is partially overlapping the first respectively upper area (5, 5e) and the second respectively lower area (6, 6e).

4. Sealing and assembly strip according to one of the preceding claims, **characterized in that** the flexible cut protection strip covers at least the first respectively upper area completely or the second respectively lower area completely.

5. Sealing and assembly strip (100, 100a-100i) according to one of the preceding claims, **characterized in that** the cut protection strip (9, 9a-9i) is a cut protection strip in the form of at least a flexible metal foil.

6. Sealing and assembly strip (100, 100a-100i) according to claim 5, **characterized in that** the flexible metal foil (9, 9a-9i) is not or only very hardly cuttable with a knife or a carpet knife.

7. Sealing and assembly strip (100, 100a-100i) according to one of the preceding claims 5 or 6, **characterized in that** the flexible metal foil (9, 9a-9i) is perforated.

8. Sealing and assembly strip (100, 100a-100i) according to one of the preceding claims 5-7, **characterized in that** the flexible metal foil (9, 9a-9i) has a lattice structure.

9. Sealing and assembly strip (100, 100a-100i) according to one of the preceding claims 1 to 4, **characterized in that** the cut protection strip (9, 9a-9i) is a cut protection strip in the form of at least a flexible Kevlar or carbon fabric.

10. Sealing and assembly strip (100, 100a-100i) according to one of the preceding claims, **characterized in that** the carrier foil (4, 4a-4i) is elastically extendable.

11. Sealing and assembly strip (100, 100a-100i) according to one of the preceding claims, **characterized in that** the cut protection strip (9, 9a-9i) is arranged in the longitudinal direction of the sealing and assembly strip (100, 100a-100i) only partially on the sealing and assembly strip (100, 100a-100i).

12. Sealing and assembly strip (100e) according to one of the preceding claims 1 or 3-11, **characterized in that** the cut protection strip (9e) is insertable into at least a pocket (25) or at least a loop.

13. Sealing and assembly strip (100b) according to one of the preceding claims, **characterized in that** the cut protection strip (9b) is at least partially arranged in the mounted state of the sealing and assembly strip (100b) on an approximately horizontal carrier surface (14).

14. Sealing and assembly strip (100c, 100d) according to one of the preceding claims 1-12, **characterized in that** the cut protection strip (9c, 9d) forms itself in the mounted state of the sealing and assembly strip (100c, 100d) an approximately horizontal carrier surface (14a, 14b).

15. Sealing and assembly strip (100d) according to one of the preceding claims, **characterized in that** the cut protection strip (9d) is arranged on an extension sealing strip (20) overlapping the carrier foil (4d).

16. Sealing and assembly strip (100a) according to one of the preceding claims, **characterized in that** the sealing and assembly strip (100a) comprises a sound barrier (11).

17. Sealing and assembly strip (100a) according to one of the preceding claims, **characterized in that** the sealing and assembly strip (100a) comprises a capillary protection strip (16).

18. Sealing and assembly strip (100a) according to one of the preceding claims, **characterized in that** the sealing and assembly strip (100a) comprises a shimming strip (28).

19. Sealing and assembly strip (100b-100d) according to one of the preceding claims, **characterized in that** the sealing and assembly strip (100b-100d) comprises a foam strip (18, 18a, 18b) with a longitudinal perforation (19, 19a, 19b).

20. Procedure with a sealing and assembly strip (100, 100a-100i) according to one of the preceding claims, **characterized in that** the following procedure steps are carried out:
a) Attaching a second respectively lower area (6, 6a-6i) of a carrier foil (4, 4a-4i) of the sealing and assembly strip (100, 100a-100i) on a connection surface (12) of a built-in object (2) or on a first wall (1a) or on a first floor (29);
b) Placing the built-in object (2) on a connection floor (29a-29c) or a connection wall (1, 1b-1e);
c) Attaching a first respectively upper area (5, 5a-5i) of the carrier foil (4, 4a-4i) of the sealing and assembly strip (100, 100a-100i) on the connection floor (29a-29c) or the connection wall (1 , 1b-1e);
d) Tiling of the first respectively upper area (5, 5a-5i) by means of tiles (3, 3a, 3b);
e) Grouting an interspace between the tiles (3, 3a, 3b) and the built-in object (2).

21. Procedure for the application of the sealing and assembly strip (100e) according to claim 20 and one of the preceding claims 1, 3-12 or 16-19, **characterized in that** between the procedure steps c) and d), the following procedure step is inserted:
aa) Inserting a cut protection strip (9e) into at least one pocket (25) or at least one loop of the sealing and assembly strip (100e).

## Revendications

1. Bande d'étanchéité et de montage (100, 100a-100i), de sorte que la bande d'étanchéité et de montage (100, 100a-100i) comprend une feuille de support (4, 4a-4i) constituée d'un premier matériau flexible, et ainsi que la feuille de support (4, 4a-4i) forme au moins une première zone respectivement supérieure (5, 5a-5i) et au moins une deuxième zone respectivement inférieure (6, 6a-6i) et de la manière que la bande d'étanchéité et de montage (100, 100a-100i) en état montée, peut être apposée avec la deuxième zone respectivement inférieure (6, 6a-6i) sur une surface de raccordement (12) d'un objet de montage (2) ou sur une première paroi (1a) ou sur un premier sol (29) et avec la première zone respectivement supérieure (5f-5i) sur un sol de raccordement (29a) ou sur une paroi de raccordement (1, 1b-1e), **caractérisé en ce que** la bande d'étanchéité et de montage (100, 100b-100e) comprend au moins une bande de protection contre les coupures (9, 9b-9e) disposée sur une face respectivement haut ou un envers respectivement dessous de la feuille de support (4, 4b-4e) en un second matériau flexible et ou le second matériau flexible est résistant à les coupures.

2. Bande d'étanchéité et de montage (100, 100b-100d) selon la revendication 1, **caractérisé en ce que** la bande flexible de protection contre les coupures (9, 9b-9d) est collée sur un face ou un envers de la feuille de support (4, 4b-4d) au moyen d'une surface adhésive (10, 15a, 15b, 21).

3. Bande d'étanchéité et de montage (100, 100e) selon l'une des revendications précédentes, **caractérisé en ce que** la bande flexible de protection contre les coupures (9, 9e) enchechevauche partiellement la première zone respectivement supérieure (5, 5e) et la deuxième zone respectivement inférieure (6, 6e).

4. Bande d'étanchéité et de montage selon l'une des revendications précédentes, **caractérisé en ce que** la bande flexible de protection contre les coupures couvre la première zone respectivement supérieure complètement ou la seconde zone respectivement inférieure complètement.

5. Bande d'étanchéité et de montage (100, 100a-100i) selon l'une des revendications précédentes, **caractérisé en ce que** la bande de protection contre les coupures (9, 9a-9i) est une bande de protection contre les coupures en forme d'au moins une feuille de métal flexible.

6. Bande d'étanchéité et de montage (100, 100a-100i) selon la revendication 5, **caractérisé en ce que** la feuille de métal flexible (9, 9a-9i) c'est ne pas taillable ou très difficile taillable avec un couteau ou avec un couteau pour les tapis.

7. Bande d'étanchéité et de montage (100, 100a-100i) selon l'une des revendications précédentes 5 ou 6, **caractérisé en ce que** la feuille de métal flexible (9, 9a-9i) est perforée.

8. Bande d'étanchéité et de montage (100, 100a-100i) selon l'une des revendications précédentes 5-7, **caractérisé en ce que** la feuille de métal flexible (9, 9a-9i) a une structure de grille.

9. Bande d'étanchéité et de montage (100, 100a-100i) selon l'une des revendications précédentes 1-4, **caractérisé en ce que** la bande de protection contre les coupures (9, 9a-9i) est une bande de protection contre les coupures en forme d'au moins un tissu flexible de Kevlar ou de carbone.

10. Bande d'étanchéité et de montage (100, 100a-100i) selon l'une des revendications précédentes, **caractérisé en ce que** la feuille de support (4, 4a-4i) est extensible élastiquement.

11. Bande d'étanchéité et de montage (100, 100a-100i) selon l'une des revendications précédentes, **caractérisé en ce que** la bande de protection contre les coupures (9, 9a-9i) est disposée dans la direction de la longueur de la bande d'étanchéité et de montage (100, 100a-100i) seulement partiellement sur la bande d'étanchéité et de montage (100, 100a-100i).

12. Bande d'étanchéité et de montage (100e) selon l'une des revendications précédentes 1 ou 3-11, **caractérisé en ce que** la bande de protection contre les coupures (9e) est insérable dans au moins une poche (25) ou au moins une boucle.

13. Bande d'étanchéité et de montage (100b) selon l'une des revendications précédentes, **caractérisé en ce que** la bande de protection contre les coupures (9b) est disposée au moins partiellement dans l'état monté de la bande d'étanchéité et de montage (100b) à une surface de support approximativement horizontale (14).

14. Bande d'étanchéité et de montage (100c, 100d) selon l'une des revendications précédentes 1-12, **caractérisé en ce que** la bande de protection contre les coupures (9c, 9d) forme elle même dans l'état monté de la bande d'étanchéité et de montage (100c, 100d) une surface de support approximativement horizontale (14a, 14b).

15. Bande d'étanchéité et de montage (100d) selon l'une des revendications précédentes, **caractérisé en ce que** la bande de protection contre les coupures (9d) est disposée sur une extension bande d'étanchéité (20) chevauchant la feuille de support (4d).

16. Bande d'étanchéité et de montage (100a) selon l'une des revendications précédentes, **caractérisé en ce que** la bande d'étanchéité et de montage (100a) comprend une barrière sonore (11).

17. Bande d'étanchéité et de montage (100a) selon l'une des revendications précédentes, **caractérisé en ce que** la bande d'étanchéité et de montage (100a) comprend une bande de protection capillaire (16).

18. Bande d'étanchéité et de montage (100a) selon l'une des revendications précédentes, **caractérisé en ce que** la bande d'étanchéité et de montage (100a) comprend une bande de calage (28).

19. Bande d'étanchéité et de montage (100b-100d) selon l'une des revendications précédentes, **caractérisé en ce que** la bande d'étanchéité et de montage (100b-100d) comprend une bande de mousse (18, 18a, 18b) avec une perforation longitudinale (19, 19a, 19b).

20. Procédé avec une bande d'étanchéité et de montage (100, 100a-100i) selon l'une des revendications précédentes, **caractérisé en ce que** les étapes suivantes sont exécutées:
a) Placement d'une deuxième zone respectivement inférieure (6, 6a-6i) d'une feuille de support (4, 4a-4i) de la bande d'étanchéité et de montage (100, 100a-100i) sur une surface de raccordement (12) d'un objet de montage (2) ou sur une première paroi (1a) ou sur un premier sol (29);
b) Mise de l'objet de montage (2) contre un sol de raccordement (29a-29c) ou une paroi de raccordement (1, 1b-1e);
c) Placement d'une première zone respectivement supérieure (5, 5a-5i) de la feuille de support (4, 4a-4i) de la bande d'étanchéité et de montage (100, 100a-100i) au le sol de raccordement (29a-29c) ou à la paroi de raccordement (1 1b-1e);
d) Carreler la première zone respectivement supérieure (5, 5a-5i) au moyen des carreaux (3, 3a, 3b);
e) Jointoyer un espace entre les carreaux (3, 3a, 3b) et l'objet de montage (2).

21. Procédé pour l'application de la bande d'étanchéité et de montage (100e) selon la revendication 20 et l'une des revendications précédentes 1, 3-12 ou 16-19, **caractérisé en ce qu'**entre les étapes c) et d), est insérée l'étape suivante:
aa) L'insertion d'une bande de protection contre les coupures (9e) dans au moins une poche (25) ou au moins une boucle de la bande d'étanchéité et de montage (100e).
